# EUROPÄISCHE PATENTSCHRIFT

(11) **EP 0 829 069 B1**
(45) Veröffentlichungstag und Bekanntmachung des Hinweises auf die Patenterteilung: **19.09.2001**
(21) Anmeldenummer: 97908220.3
(22) Anmeldetag: 12.03.1997
(51) Int. Cl.: G07B 13/02

(54) **DATENÜBERTRAGUNGSVORRICHTUNG IN EINEM FAHRZEUG, BESTEHEND AUS EINEM IMPULSGEBER UND EINEM KONTROLLGERÄT, SOWIE IMPULSGEBER FÜR DAS KONTROLLGERÄT**
DATA-TRANSMISSION DEVICE, CONSISTING OF A PULSE GENERATOR AND A MONITORING UNIT, FOR USE IN VEHICLE, AND PULSE GENERATOR FOR USE WITH THE MONITORING UNIT
DISPOSITIF DE TRANSMISSION DE DONNEES SITUE DANS UN VEHICULE, COMPOSE D'UN GENERATEUR D'IMPULSIONS ET D'UN APPAREIL DE CONTROLE, ET GENERATEUR D'IMPULSIONS APPROPRIE A L'APPAREIL DE CONTROLE

(30) Priorität: 15.03.1996 DE 19610161
(43) Veröffentlichungstag der Anmeldung: 18.03.1998
(73) Patentinhaber: Mannesmann VDO AG, 60326 Frankfurt (DE)
(72) Erfinder: GRILL, Thomas, D-78048 Villingen-Schwenningen (DE); GRULER, Martin, D-78554 Aixheim (DE); BÜSCHER, Ludwig, D-78048 Villingen-Schwenningen (DE); BACIC, Helmut, D-78126 Königsfeld (DE); LAIS, Norbert, D-78052 Villingen-Schwenningen (DE); SCHULTZE, Hartmut, D-78052 Villingen-Schwenningen (DE); WANGLER, Josef, D-78052 Villingen-Schwenningen (DE)
(86) Internationale Anmeldenummer: EP9701247
(87) Internationale Veröffentlichungsnummer: WO9735282

(56) Entgegenhaltungen:
- EP-A- 0 608 651
- DE-C- 4 202 583
- PROCEEDINGS OF THE INTERNATIONAL CARNAHAN CONFERENCE ON SECURITY TECHNOLOGY: CRIME COUNTERMEASURES, LEXINGTON, OCT. 10 - 12, 1990, Nr. -, 10.Oktober 1990, JACKSON J S, Seiten 29-32, XP000222750 COOKE L: "SENSOR TECHNOLOGY AND SIGNAL ANALYSIS: HIGH SECURITY ENCRYPTION SUPERVISION"

## Beschreibung

Die Erfindung betrifft eine Datenübertragungsvorrichtung in einem Fahrzeug, bestehend aus einem Impulsgeber und einem Kontrollgerät, sowie einen Impulsgeber für das Kontrollgerät.

Impulsgeber werden üblicherweise in ein Fahrzeuggetriebe eingebracht und generieren durch eine in Abhängigkeit von der Zeit vorgenommene Erfassung des Wechsels von Zahn und Zahnlücke eines rotierenden Getrieberades ein zur Fahrzeuggeschwindigkeit proportional moduliertes elektrisches Signal. Dieses Signal wird einem Kontrollgerät zur Aufzeichnung und Auswertung zugeleitet, das im Straßenverkehr beispielsweise als Fahrtschreiber, Taxameter, Logbuch oder ähnliche Einrichtung ausgebildet ist (EP-A- 0 608 651).

Derartige Impulsgeber besitzen zumeist neben dem Sensorelement eine Schaltungsanordnung für eine erste Signalaufbereitung und einen Signaltreiber, um das vom Sensorelement erfaßte und für zahlreiche Störeinflüsse zunächst noch anfällige Signal für eine leitungsgebundene Übertragung an das Kontrollgerät in dem rauhen Milieu eines Fahrzeugs transportfähig aufzubereiten. Die Stromversorgung der Elektronik des Impulsgebers erfolgt dabei in der Regel vom Kontrollgerät aus über elektrische Verbindungsleitungen.

Bei einer Ausbildung des Kontrollgerätes als Fahrtschreiber wird das vom Impulsgeber erfaßte Signal zur Überwachung der Einhaltung der gesetzlichen Sozialvorschriften bezüglich der Lenkzeiten und Ruhezeiten des Fahrzeugführers und/oder der Einhaltung der Straßenverkehrsordnung hinsichtlich der für das Fahrzeug maximal zulässigen Geschwindigkeit ausgewertet. Aufgrund dieser Zweckbestimmung ist das vom Impulsgeber erfaßte Signal erfahrungsgemäß oft Gegenstand diverser Manipulationen, wobei zumeist versucht wird, auf die Übertragungsstrecke des Signals vom Impulsgeber an das Kontrollgerät unberechtigten Einfluß zu nehmen. Bislang angewandte Gegenmaßnahmen, die vorsehen, ein zum erfaßten Signal invertiertes Signal simultan über eine weitere, zusätzlich zur Signalleitung vorgesehene parallele Leitung zu übertragen und im Kontrollgerät beide Signale vergleichend auszuwerten, haben sich als unzureichend erwiesen, da Vorrichtungen bekannt geworden sind, die bei ihrer Einbringung in die Übertragungsstrecke vom Impulsgeber zum Kontrollgerät diesen Doppelimpuls zu simulieren vermögen, ohne daß der gesetzwidrige Eingriff durch Registrierung im Kontrollgerät nachweisbar ist.

Es ist nun die Aufgabe der vorliegenden Erfindung, eine aus einem Impulsgeber und einem Kontrollgerät bestehende Datenübertragungsvorrichtung in einem Fahrzeug in ihrer Sicherheit bezüglich des zu übertragenden Signals zu verbessern und eine dafür geeignete Ausbildung des Impulsgebers aufzuzeigen.

Die Aufgabe wird durch die Merkmale der nebengeordneten Ansprüche 1 und 8 gelöst. Die jeweils davon abhängigen Ansprüche zeigen vorteilhafte Ausgestaltungen und Weiterbildungen der gefundenen Lösung.

Die gefundene Lösung hat den Vorteil, zur bisher üblichen Vier-Leiter-Technik für die Übertragungsstrecke vom Impulsgeber zum Kontrollgerät kompatibel zu sein, denn nach wie vor werden zwei Leitungen zur Stromversorgung und nur zwei weitere Leitungen für die Signalübertragung benötigt. Dadurch, daß die einst zur Übertragung des invertierten Signals benutzte Signalleitung jetzt als Datenleitungvorzugsweise für eine bidirektionale Datenübertragung - verwendet wird, sind keine mehradrigen, teureren Leitungen erforderlich. Deshalb kann die gefundene Datenübertragungsvorrichtung durch Austausch des Impulsgebers und des Kontrollgerätes im vorhandenen Fahrzeugbestand verhältnismäßig leicht nachgerüstet werden, ohne daß Kosten für eine aufwendige neue Leitungsverlegung entstehen.

Ein weiterer Vorteil besteht darin, daß dadurch, daß das vom Sensorelement des Impulsgebers erfaßte Signal auch weiterhin unmittelbar nach seiner Erfassung, dh in Form eines Echtzeitsignals übertragen wird, die herkömmliche Art der Signalaufbereitung im Impulsgeber und im Kontrollgerät beibehalten werden kann. So können bewährte Schaltungstechniken weiter verwendet werden, was den Entwicklungsaufwand zur Schaffung der aufgabengemäß angestrebten Datenübertragungsvorrichtung reduziert. Vorhandene Systemkomponenten werden vorteilhaft ergänzt, was zu einer kostengünstigen Realisierung führt und eine schnellere Kundenakzeptanz erwarten läßt.

Besonders vorteilhaft ist, daß das als verschlüsseltes Signal aufbereitete Datensignal nicht zeitgleich mit dem als Echtzeitsignal vorliegenden unverschlüsselten Signal übertragen werden muß, weil es in der Praxis ausreicht, wenn die Manipulationsprüfung nur bei Bedarf erfolgt. Dadurch ist es nicht erforderlich, die im Kontrollgerät vorhandenen Hardware-Resourcen leistungsstärker auszulegen, sondern eine problemlose Einbindung der gefundenen Lösung in die im Kontrollgerät vorhandene Logikeinheit ist möglich. Auch im Impulsgeber können die neuen Funktionen durch Implementierung verhältnismäßig einfacher Baugruppen realisiert werden, so daß die vorgeschlagene Datenübertragungsvorrichtung in allen ihren Bestandteilen kostengünstig herstellbar ist.

Weil die Manipulationsprüfung nur bei Bedarf erfolgt, kann die Datenübertragungsrate gering gewählt werden, wodurch zur Anbindung der Datenleitung nur recht leicht erfüllbare Anforderungen an die im Impulsgeber und im Kontrollgerät vorzusehenden Datenschnittstellen gestellt werden. Im übrigen führt eine geringe Datenübertragungsrate auch zu einer Erhöhung der Zuverlässigkeit einer Schnittstelle. Die Beibehaltung des Echtzeitsignals trägt ferner zur Funktionsstabilität der Datenübertragungsvorrichtung bei, denn selbst wenn die Elektronik zur Erzeugung des verschlüsselten Signals einmal ausfallen sollte, steht dennoch durch das fortlaufend übertragene Echtzeitsignal ein hinsichtlich der eingangs genannten Kriterien auswertbares Signal zur Verfügung, auch wenn bei diesem teilweisen Systemausfall ein Manipulationsnachweis nun nicht mehr führbar ist.

Durch die Trennung der Übertragung des Echtzeitsignals vom Verschlüsselungsverfahren ist es möglich, die Taktfrequenz der Kodierschaltung im Impulsgeber verhältnismäßig niedrig zu halten, was sich sehr günstig auf das elektromagnetische Strahlungsverhalten, auf den Stromverbrauch und vor allem auf die Verlustleistung auswirkt. Denn die Abstrahlung elektronischer Logikbausteine ist um so intensiver, desto höher die Taktfrequenz ist. Des weiteren verhält sich auch die Verlustleistung direkt proportional zur Taktfrequenz.

Tatsächlich ist es so, daß dadurch, daß im Impulsgeber verhältnismäßig einfache Baugruppen eingesetzt werden können, eine Datenübertragungsvorrichtung mit den angestrebten Eigenschaften bezüglich der Übertragungssicherheit unter den extremen Umweltbedingungen in einem Fahrzeug erst möglich wird. Denn ein in einem Fahrzeuggetriebe eingebrachter Impulsgeber arbeitet im oberen Temperaturbereich der üblichen Spezifikation elektronischer Silizium-Bauelemente. Für Halbleiterbauelemente gilt, daß sie bei sehr hohen Betriebstemperaturen zwar nicht notwendigerweise schlagartig ausfallen, daß ihre Lebensdauer aber dadurch reduziert werden kann. Um dennoch die erforderliche Funktionssicherheit zu gewährleisten, ist die durch die Schaltungsanordnung in ihrem Betrieb erzeugte Stromwärme unbedingt gering zu halten, was insbesondere durch die besondere Art der verwendeten Bauelemente und einen niedrigen Systemtakt erreicht wird.

Die im Impulsgeber zur Realisierung der gefundenen Lösung erforderlichen Bauelemente benötigen nicht viel Platz, so daß die Geometrie heutiger Impulsgeber beibehalten werden kann. Dieses kommt dem Umstand entgegen, daß der in Fahrzeuggetrieben für die Anbringung eines Impulsgebers zur Verfügung stehende Bauraum äußerst begrenzt ist.

Eine vorteilhafte Ausgestaltung der Kodierschaltung im Impulsgeber sieht vor, diese durch ein Mikrocontrollersystem zu realisieren. Wenn die Datenleitung vom Impulsgeber zum Kontrollgerät bidirektional ausgeführt ist, kann das Kontrollgerät den Impulsgeber über diese Leitung zur Übersendung der zwischengespeicherten Daten auffordern. Alternativ kann die Übertragung der verschlüsselten Daten vom Impulsgeber zum Kontrollgerät aber auch nach anderen Kriterien gesteuert werden.

Vorzugsweise wird das vom Impulsgeber erfaßte Signal mit dem standardisierten DES-Verschlüsselungsverfahren (Data Encryption Standard) verschlüsselt, weil dieses Verschlüsselungsverfahren nach dem heutigen Stand der Technik als äußerst sicher gilt. Die Sicherheit dieses Verschlüsselungsverfahren beruht auf der praktischen Unmöglichkeit, aus der Kenntnis der verschlüsselten und unverschlüsselten Nachricht den Schlüssel zu berechnen.

Da gleiche Erfassungssignale auch immer gleiche verschlüsselte Nachrichten erzeugen, kann überdies vorgesehen werden, einen vom Kontrollgerät generierten Zufallswert zusätzlich zum Erfassungssignal verschlüsselt zu übertragen. Dadurch wird nach außen jeder systematische Zusammenhang zwischen einem unverschlüsseltem und einem verschlüsselten Signal vermieden. Auch könnten zur weiteren Erhöhung der Datensicherheit die Schlüssel des Verschlüsselungsverfahrens während des Betriebes der Datenübertragungsvorrichtung immer wieder einmal getauscht werden.

Die Funktionssicherheit des Mikrocontrollersystems kann dadurch noch erhöht werden, daß die Merkmale einer Watchdogfunktion und die eines Power-On-Resets realisiert werden. Immer dann, wenn das Mikrocontrollersystem durch eine Manipulation oder durch sonstige Störeinflüsse, zB Störeinstrahlungen (EMV), gestört wurde, muß es nach Beendigung der Störung wieder in einen stabilen definierten Zustand gebracht werden. Das Kontrollgerät erkennt eine Störung daran, daß eine ordnungsgemäße Kommunikation mit dem Impulsgeber nicht möglich ist.

Der Power-On-Reset spricht bei Spannungsunterbrechung oder bei Unterspannung in der Versorgungsleitung an und ist in Verbindung mit dem Netzteil des Impulsgebers zu realisieren. Für die Realisierung der Watchdogfunktion sind zwei Varianten möglich. Entweder wird die auf das Mikrocontrollersystem gerichtete Watchdogfunktion intern im Impulsgeber verwirklicht, so daß beim Ausfall des Mikrocontrollersystems ein Reset-Befehl ausgelöst wird, der das Mikrocontrollersystem neu initialisiert. Oder die Watchdogfunktion wird vom Kontrollgerät wahrgenommen, indem das Kontrollgerät dann die Initialisierung des Mikrocontrollersystems des impulsgebers veranlaßt, wenn Signalmeldungen vom Mikrocontrollersystem ausbleiben. Dazu zieht das Kontrollgerät die Datenleitung für eine gewisse Zeit auf ihren unteren Signalpegel (LOW). Wenn das der Fall ist, spricht im Impulsgeber ein Monoflop an, das einen Steuerimpuls als Reset-Befehl zur Initialisierung des Mikrocontrollersystems auslöst.

Anhand eines vereinfachten Blockschaltbildes gemäß der anliegenden Figur sollen die einzelnen Merkmale der vorgeschlagenen Datenübertragungsvorrichtung sowie ihre Arbeitsweise nochmals kurz erläutert werden.

Ein Impulsgeber 1 ist über eine zweiadrige Versorgungsleitung 18, eine Signalleitung 9 und eine Datenleitung 19 mit einem Kontrollgerät 20 verbunden. Der Impulsgeber 1 besitzt ein Sensorelement 2 zur Erfassung der Drehfrequenz eines Getriebezahnrades, eine Schaltungsanordnung 3 für eine erste Signalaufbereitung des vom Sensorelement 2 erfaßten Signals und einen Signaltreiber 4 zur Verstärkung dieses Signals. Das Sensorelement 2 kann zB ein Hall-Element sein. Das vom Sensorelement 2 generierte Signal wird vorteilhafterweise in ein aus Rechteckimpulsen bestehendes Frequenzsignal umgeformt und als solches vom Signaltreiber 4 über die Signalleitung 9 an das Kontrollgerät 20 gesendet. Im Kontrollgerät 20 ist eine Schaltungsanordnung 12 vorgesehen, die das gesendete Impulssignal empfängt und zur Registrierung an eine Logikeinheit 14 weiterleitet. Die Registrierung beinhaltet eine zeitbezogene Zählung der empfangenen Impulse. Der Signaltreiber 4 und die Schaltungsanordnung 12 bilden die Schnittstellen der Signalleitung 9.

Sowohl im Kontrollgerät 20 als auch im Impulsgeber 1 sind jeweils Netzteile 5 und 16 vorgesehen, die durch eine in der Regel zweiadrige Versorgungsleitung 18 miteinander verbunden sind. Die elektrische Energie zum Betrieb der Elektronik im Impulsgeber 1 wird vorzugsweise vom Kontrollgerät 20 bereitgestellt. Es ist vorteilhaft, das Netzteil 5 des Impulsgebers 1 um eine Schaltungsanordnung 6 zur Spannungsüberwachung, zB einen integrierten Spannungsregler, und um Mittel zur Auslösung eines Power-On-Resets zu erweitern.

Erfindungsgemäß wird das in der Schaltungsanordnung 3 aufbereitete Signal auch einer Kodierschaltung 7 zugeführt, die vorzugsweise als ein Mikrocontrollersystem ausgebildet ist. In der Kodierschaltung 7 werden die Rechteckimpulse des Signals in einem Zählregister zunächst aufsummiert. Wenn das Kontrollgerät 20 zur Übertragung des Zählerstandes auffordert, wird der Zählerstand beispielsweise mit dem standardisierten DES-Verschlüsselungsverfahren verschlüsselt und dem Kontrollgerät über eine als Sende- und Empfangsschaltung ausgebildete Schnittstelle 8 zugesendet.

Nachdem das über die Datenleitung 19 gesendete Signal von der ebenfalls als Sende- und Empfangsschaltung ausgebildeten Schnittstelle 13 im Kontrollgerät 20 empfangen worden ist, wird es an die Logikeinheit 14 des Kontrollgerätes zur Dekodierung weitergeleitet, damit anschließend im Vergleicher 15 die Echtheit des zuvor über die Signalleitung 9 übermittelten Signals ermittelt werden kann. Dazu wird der über die Datenleitung 19 empfangene und anschließend entschlüsselte Zählerstand mit Bezug auf einen definierten Zeitraum mit demjenigen Zählerstand verglichen, der sich durch die Registrierung der über die Signalleitung 9 übertragenen Rechteckimpulse in dem Speicher des Kontrollgerätes 20 ergeben hat. Die Baugruppe 17 bezeichnet zusammenfassend alle Mittel, die zur Realisierung der übrigen Funktionen des Kontrollgerätes erforderlich sind, auf die hier aber nicht näher eingegangen wird, weil sie mit dem Gegenstand der Erfindung nicht in direktem Zusammenhang stehen.

Unter der Initialisierung der Datenübertragungsvorrichtung soll die Übertragung des Schlüssels vom Kontrollgerät 20 an den Impulsgeber 1 verstanden werden. Der Vorgang der Initialisierung unterscheidet sich demnach vom Betrieb der Datenübertragungsvorrichtung.

Sowohl in der Kodierschaltung 7 des Impulsgebers 1 als auch in der Logikeinheit 14 des Kontrollgerätes 20 ist ein Masterschlüssel hinterlegt. Bei der Initialisierung der Datenübertragungsvorrichtung wird in der Logikeinheit 14 des Kontrollgerätes 20 ein neuer zufälliger Schlüssel generiert. Dieser neue Schlüssel wird unter Zuhilfenahme des Masterschlüssels in der Logikeinheit 14 verschlüsselt und über die Datenleitung 19 zum Impulsgeber 1 übertragen. Der neue Schlüssel wird im Impulsgeber 1 anhand des dort hinterlegten Masterschlüssels entschlüsselt und in einem zur Kodierschaltung 7 gehörenden Speicher hinterlegt. Der neue Schlüssel wird erst dann gültig, wenn er vom Kontrollgerät 20 bestätigt wird (Semaphore-Prinzip). Hierzu wird im Impulsgeber 1 der Masterschlüssel mit dem neuen Schlüssel verschlüsselt und nach Aufforderung durch das Kontrollgerät 20 an das Kontrollgerät 20 übertragen. Erst nach einer im Kontrollgerät 20 durchgeführten Überprüfung wird bei positivem Ergebnis der neue Schlüssel durch eine Meldung an die Kodierschaltung 7 des Impulsgebers 1 bestätigt, wodurch im Impulsgeber 1 die Freischaltung des "Betriebsmode" erfolgt.

Im weiteren wird davon ausgegangen, daß der Speicher im Impulsgeber als Zählregister ausgebildetet ist, was einer bevorzugten Ausführung entspricht. Während des Betriebs der Datenübertragungsvorrichtung sind für den Datenverkehr auf der Datenleitung 19 im wesentlichen nur zwei Befehle erforderlich, die von der Logikeinheit 14 des Kontrollgerätes 20 zur Steuerung des Verhaltens der Kodierschaltung 7 im Impulsgeber 1 an die Kodierschaltung 7 gerichtet werden. Es sind Befehle, die 1.) den Zählerstand aus dem Zählregister auslesen und verschlüsseln sowie 2.) den verschlüsselten Zählerstand übertragen. Auch für die Schlüsselübertragung sind nur drei Befehle erforderlich, nämlich 3.) ein Befehl, um einen verschlüsselten Schlüssel in Empfang zu nehmen, zu dekodieren und den Masterschlüssel mit dem neuen Schlüssel zu kodieren, 4.) ein Befehl, um den verschlüsselten Masterschlüssel zurückzusenden sowie 5.) ein Befehl, um den neuen Schlüssel zu bestätigen. Somit kann sich die Kommunikation zwischen dem Impulsgeber 1 und dem Kontrollgerät 20 auf insgesamt fünf Befehle beschränken. Im Blockschaltbild wird das Signal, das von der Logikeinheit 14 des Kontrollgerätes 20 an die Kodierschaltung 7 im Impulsgeber 1 über die Datenleitung 19 übertragen wird und Befehle und Daten beinhaltet, unter dem Bezugszeichen 10 zusammengefaßt. Das in umgekehrter Richtung übertragene, nur Daten enthaltene Signal ist mit dem Bezugszeichen 11 bezeichnet. Das Kontrollgerät 20 wirkt somit gegenüber dem Mikrocontrollersystem im Impulsgeber 1 als Master, denn das Mikrocontrollersystem des Impulsgebers reagiert wie ein Slave nur nach Aufforderung von außen durch zugeleitete Befehle.

Die erfindungsgemäß ausgebildete Datenübertragungsvorrichtung erkennt, ob die Signalleitung oder die Datenleitung auf definierte Pegel gelegt werden, ob die Signalleitung oder die Datenleitung auf einen zweiten (systemfremden) Impulsgeber umgeschaltet werden, ob das Gebersignal fremdeingespeist wird, ob in der Datenleitung oder der Signalleitung ein Impulsteiler zwischengeschaltet ist, ob das auf der Signalleitung oder auf der Datenleitung übertragene, Daten enthaltene Signal zwecks Abhörung über längere Zeit umgeleitet worden ist und, falls das Netzteil 5 des Impulsgebers 1 mit einer Schaltungsanordnung 6 zur Spannungsüberwachung erweitert ist, ob in der Versorgungsleitung die Versorgungsspannung in ihrer Amplitude, zB durch ein zwischengeschaltetes Potentiometer, abgeschwächt wird.

Eine mit den vorgeschlagenen Merkmalen ausgestattete Datenübertragungsvorrichtung erkennt deshalb jede gängige Manipulation an irgendeiner ihrer Verbindungsleitungen, da nach der Initialisierung der Datenübertragungsvorrichtung Impulsgeber und Kontrollgerät durch Festlegung, Übertragung und Überprüfung eines Identifikationsmerkmals einander unverwechselbar zugeordnet sind.

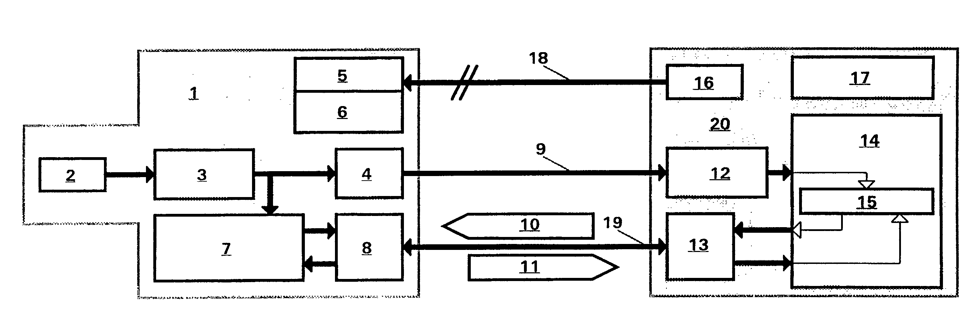

## Patentansprüche

1. Datenübertragungsvorrichtung in einem Fahrzeug, bestehend aus einem Impulsgeber und einem Kontrollgerät,
wobei der Impulsgeber (1) ein Sensorelement (2) enthält, um ein zur Fahrzeuggeschwindigkeit proportional moduliertes elektrisches Signal zu generieren,
**dadurch gekennzeichnet,**
a) daß im Impulsgeber (1) eine Schaltungsanordnung (3) zur Signalaufbereitung das vom Sensorelement (2) generierte Signal in eine Folge von Rechteckimpulsen formt,
b) daß der Impulsgeber (1) einen Speicher zur Registrierung der Rechteckimpulse sowie eine Kodierschaltung (7) zur Verschlüsselung des Speicherinhalts aufweist,
c) daß Impulsgeber (1) und Kontrollgerät (20) sowohl durch eine Signalleitung (9) als auch durch eine Datenleitung (19) miteinander verbunden sind,
d) wobei die Signalleitung (9) das Signal des Sensorelementes (2) unverschlüsselt überträgt und
e) wobei die Datenleitung (19) den im Speicher des Impulsgebers (1) durch die registrierte Rechteckimpulsfolge gebildeten Speicherinhalt von dort an das Kontrollgerät (20) verschlüsselt überträgt,
f) daß das Kontrollgerät (20) über einen Speicher zur Registrierung des über die Signalleitung (9) fortlaufend übertragenen Signals verfügt,
g) daß das Kontrollgerät (20) eine Logikeinheit (14) zur Entschlüsselung des über die Datenleitung (19) empfangenen verschlüsselten Signals aufweist,
h) und daß das Kontrollgerät (20) in Verbindung mit einer Logikeinheit (14) mit einem Vergleicher (15) ausgestattet ist, um das entschlüsselte Signal mit dem über die Signalleitung (9) übertragenen und im Kontrollgerät (20) gespeicherten Signal zur Überprüfung seiner Unverfälschtheit mit Bezug auf einen definierten Zeitraum zu vergleichen.

2. Datenübertragungsvorrichtung nach Anspruch 1,
**dadurch gekennzeichnet,**
**daß** sowohl in der Kodierschaltung (7) des Impulsgebers (1) als auch in der Logikeinheit (14) des Kontrollgerätes (20) ein gleicher Masterschlüssel hinterlegt ist.

3. Datenübertragungsvorrichtung nach einem der vorangegangenen Ansprüche,
**dadurch gekennzeichnet,**
**daß** die im Impulsgeber (1) vorgesehene Kodierschaltung (7) das vom Sensorelement (2) generierte Signal nach dem DES-Verschlüsselungsverfahren (Data Encryption Standard) verschlüsselt.

4. Datenübertragungsvorrichtung nach einem der vorangegangenen Ansprüche,
**dadurch gekennzeichnet,**
**daß** die im Impulsgeber (1) befindliche Kodierschaltung (7) durch ein Mikrocontrollersystem gebildet wird.

5. Datenübertragungsvorrichtung nach einem der vorangegangenen Ansprüche,
**dadurch gekennzeichnet,**
**daß** die im Impulsgeber (1) und im Kontrollgerät (20) vorgesehenen Speicher als Zählregister zur Registrierung von Impulsen ausgebildet sind.

6. Datenübertragungsvorrichtung nach einem der vorangegangenen Ansprüche,
**dadurch gekennzeichnet,**
**daß** die Datenleitung (19) zwischen dem Impulsgeber (1) und dem Kontrollgerät (20) mit ihren Schnittstellen (8 und 13) für eine bidirektionale Datenübertragung ausgebildet ist.

7. Datenübertragungsvorrichtung nach einem der vorangegangenen Ansprüche,
**dadurch gekennzeichnet,**
**daß** die über die Datenleitung (19) geführte Kommunikation zwischen dem Impulsgeber (1) und dem Kontrollgerät (20) vom Kontrollgerät (20) gesteuert wird.

8. Impulsgeber für eine aus einem Impulsgeber und einem Kontrollgerät bestehende Datenübertragungsvorrichtung in einem Fahrzeug mit einem Sensorelement zur Generierung eines zur Fahrzeuggeschwindigkeit proportional moduliertes elektrisches Signals,
**gekennzeichnet**
- durch eine Schaltungsanordnung (3) zur Signalaufbereitung, die das vom Sensorelement (2) generierte-Signal in eine Folge von Rechteckimpulsen formt,
- durch einen Speicher zur Registrierung der Rechteckimpulse sowie durch eine Kodierschaltung (7) zur Verschlüsselung von dessen Speicherinhalt,
- durch Schnittstellen (4 und 8) zur Verbindung des Impulsgeber (1) mit dem Kontrollgerät (20) sowohl mittels einer Signalleitung (9) als auch mittels einer Datenleitung (19).

9. Impulsgeber nach Anspruch 8,
**dadurch gekennzeichnet,**
**daß** in der Kodierschaltung (7) ein Masterschlüssel hinterlegt ist.

10. Impulsgeber nach Anspruch 8 oder 9,
**dadurch gekennzeichnet,**
**daß** die Kodierschaltung (7) das vom Sensorelement (2) generierte Signal nach dem DES-Verschlüsselungsverfahren (Data Encryption Standard) verschlüsselt.

11. Impulsgeber nach einem der Ansprüche 8 bis 10,
**dadurch gekennzeichnet,**
**daß** die Kodierschaltung (7) durch ein Mikrocontrollersystem gebildet wird.

12. Impulsgeber nach einem der Ansprüche 8 bis 11,
**dadurch gekennzeichnet,**
**daß** der Speicher als Zählregister zur Registrierung von Impulsen ausgebildet ist.

13. Impulsgeber nach einem der Ansprüche 8 bis 12,
**dadurch gekennzeichnet,**
**daß** die Schnittstelle (8) zur Anbindung der Datenleitung (19) für eine bidirektionale Datenübertragung ausgebildet ist.

14. Impulsgeber nach Anspruch 11,
**dadurch gekennzeichnet,**
**daß** in Verbindung mit dem Mikrocontrollersystem eine Watchdogfunktion und ein Power-On-Reset realisiert ist.

## Claims

1. Data transmission device in a vehicle, composed of a pulse transmitter and a monitoring device, the pulse transmitter (1) containing a sensor element (2) in order to generate an electrical signal which is modulated in proportion to the speed of the vehicle, characterized
a) in that a circuit arrangement (3) for signal conditioning in the pulse transmitter (1) shapes the signal generated by the sensor element (2) into a sequence of square-wave pulses,
b) in that the pulse transmitter (1) has a memory for recording the square-wave pulses and a coding circuit (7) for encrypting the contents of the memory,
c) in that the pulse transmitter (1) and monitoring device (20) are connected to one another both by a signal line (9) and by a data line (19),
d) the signal line (9) transmitting the signal of the sensor element (2) in unencrypted form, and
e) the data line (19) transmitting in encrypted form the memory contents formed in the memory of the pulse transmitter (1) by the recorded square-wave pulse sequence, from there to the monitoring unit (20),
f) in that the monitoring device (20) has a memory for recording the signal which is continuously transmitted via the signal line (9),
g) in that the monitoring device (20) has a logic unit (14) for decrypting the encrypted signal received via the data line (19),
h) and in that the monitoring device (20) in conjunction with a logic unit (14) is equipped with a comparator (15) in order to compare the decrypted signal with the signal transmitted via the signal line (9) and stored in the monitoring unit (20), in order to check that it is not falsified with respect to a defined time period.

2. Data transmission device according to Claim 1, **characterized in that** an identical master key is stored both in the coding circuit (7) of the pulse transmitter (1) and in the logic unit (14) of the monitoring device (20).

3. Data transmission device according to one of the preceding claims, **characterized in that** the coding circuit (7) which is provided in the pulse transmitter (1) encrypts the signal generated by the sensor element (2) in accordance with the DES encryption method.

4. Data transmission device according to one of the preceding claims, **characterized in that** the coding circuit (7) located in the pulse transmitter (1) is formed by a microcontroller system.

5. Data transmission device according to one of the preceding claims, **characterized in that** the memories provided in the pulse transmitter (1) and in the monitoring device (20) are embodied as counting registers for recording pulses.

6. Data transmission device according to one of the preceding claims, **characterized in that** the data line (19) between the pulse transmitter (1) and the monitoring device (20) is embodied with its interfaces (8 and 13) for a bidirectional data transmission.

7. Data transmission device according to one of the preceding claims, **characterized in that** the communication between the pulse transmitter (1) and the monitoring device (20) which is conducted via the data line (19) is controlled by the monitoring device (20).

8. Pulse transmitter for a data transmission device which is composed of a pulse transmitter and a monitoring device, in a vehicle having a sensor element for generating an electrical signal which is modulated in proportion to the vehicle speed, characterized
- by a circuit arrangement (3) for signal conditioning, which shapes the signal generated by the sensor element (2) into a sequence of square-wave pulses,
- by a memory for recording the square-wave pulses and by a coding circuit (7) for encrypting its memory contents,
- by interfaces (4 and 8) for connecting the pulse transmitter (1) to the monitoring device (20) both by means of a signal line (9) and by means of a data line (19).

9. Pulse transmitter according to Claim 8, **characterized in that** a master key is stored in the coding circuit (7).

10. Pulse transmitter according to Claim 8 or 9, **characterized in that** the coding circuit (7) encrypts the signal generated by the sensor element (2) in accordance with the DES encryption method (Data Encryption Standard).

11. Pulse transmitter according to one of Claims 8 to 10, **characterized in that** the coding circuit (7) is formed by a microcontroller system.

12. Pulse transmitter according to one of Claims 8 to 11, **characterized in that** the memory is embodied as a counting register for recording pulses.

13. Pulse transmitter according to one of Claims 8 to 12, **characterized in that** the interface (8) for connecting the data line (19) is designed for a bidirectional data transmission.

14. Pulse transmitter according to Claim 11, **characterized in that** a watchdog function and a power-on reset are implemented in conjunction with the microcontroller system.

## Revendications

1. Dispositif de transmission de données dans un véhicule constitué d'un générateur d'impulsions et d'un appareil de contrôle, le générateur d'impulsions (1) contenant un élément capteur (2) pour engendrer un signal électrique modulé proportionnellement à la vitesse du véhicule,
**caractérisé par** le fait
a) que dans ledit générateur d'impulsions (1), un arrangement de circuits (3) transforme, pour la mise en forme des signaux, le signal engendré par l'élément capteur (2) en une séquence d'impulsions rectangulaires,
b) que le générateur d'impulsions (1) présente une mémoire pour l'enregistrement des impulsions rectangulaires ainsi qu'un circuit de codage (7) pour le codage du contenu de mémoire,
c) que le générateur d'impulsions (1) et l'appareil de contrôle (20) sont reliés l'un à l'autre aussi bien par une ligne d'acheminement des signaux (9) que par une ligne d'acheminement des données (19),
d) la ligne d'acheminement des signaux (9) transmettant le signal de l'élément capteur (2) non codé et
e) la ligne d'acheminement des données (19) transmettant, sous forme codée, le contenu de mémoire constitué dans la mémoire du générateur d'impulsions (1) par la séquence d'impulsions rectangulaires enregistrée, de là à l'appareil de contrôle (20),
f) que l'appareil de contrôle (20) dispose d'une mémoire pour l'enregistrement du signal transmis en continu par l'intermédiaire de la ligne d'acheminement des signaux (9),
g) que l'appareil de contrôle (20) présente une unité logique (14) pour le décodage du signal codé reçu par l'intermédiaire de la ligne d'acheminement des données (19),
h) et que l'appareil de contrôle (20) est équipé, en combinaison avec une unité logique (14), d'un comparateur (15) pour comparer le signal décodé avec le signal transmis par l'intermédiaire de la ligne d'acheminement des signaux (9) et mémorisé dans l'appareil de contrôle (20) pour la vérification de son authenticité référée à un espace de temps défini.

2. Dispositif de transmission de données selon la revendication 1,
**caractérisé par** le fait
qu'une clé principale identique est stockée aussi bien dans le circuit de codage (7) du générateur d'impulsions (1) que dans l'unité logique (14) de l'appareil de contrôle (20) .

3. Dispositif de transmission de données selon l'une quelconque des revendications précédentes,
**caractérisé par** le fait
que le circuit de codage (7) prévu dans le générateur d'impulsions (1) code le signal engendré par l'élément capteur (2) selon le procédé de codage DES (Data Encryption Standard).

4. Dispositif de transmission de données selon l'une quelconque des revendications précédentes,
**caractérisé par** le fait
que le circuit de codage (7) disposé dans le générateur d'impulsions (1) est constitué par un système de microcontrôleur.

5. Dispositif de transmission de données selon l'une quelconque des revendications précédentes,
**caractérisé par** le fait
que les mémoires prévues dans le générateur d'impulsions (1) et dans l'appareil de contrôle (20) sont réalisées sous forme de registres de comptage pour l'enregistrement d'impulsions.

6. Dispositif de transmission de données selon l'une quelconque des revendications précédentes,
**caractérisé par** le fait
que la ligne d'acheminement des données (19) entre le générateur d'impulsions (1) et l'appareil de contrôle (20) est réalisée, avec ses interfaces (8 et 13), pour une transmission de données bidirectionnelle.

7. Dispositif de transmission de données selon l'une quelconque des revendications précédentes,
**caractérisé par** le fait
que la communication établie par l'intermédiaire de la ligne d'acheminement des données (19) entre le générateur d'impulsions (1) et l'appareil de contrôle (20) sera commandée par ledit appareil de contrôle (20).

8. Générateur d'impulsions pour un dispositif de transmission de données constitué d'un générateur d'impulsions et d'un appareil de contrôle dans un véhicule avec un élément capteur pour la génération d'un signal électrique modulé proportionnellement à la vitesse d'un véhicule,
caractérisé
- par un arrangement de circuits (3) pour la mise en forme du signal qui transforme le signal engendré par l'élément capteur (2) en une séquence d'impulsions rectangulaires,
- par une mémoire pour l'enregistrement des impulsions rectangulaires ainsi que par un circuit de codage (7) pour le codage du contenu de ladite mémoire,
- par des interfaces (4 et 8) pour la connexion du générateur d'impulsions (1) à l'appareil de contrôle (20) aussi bien par l'intermédiaire d'une ligne d'acheminement des signaux (9) que d'une ligne d'acheminement des données (19) .

9. Générateur d'impulsions selon la revendication 8,
**caractérisé par** le fait
que dans le circuit de codage (7) est stockée une clé principale.

10. Générateur d'impulsions selon la revendication 8 ou 9,
**caractérisé par** le fait
que le circuit de codage (7) code le signal engendré par l'élément capteur (2) selon le procédé de codage DES (Data Encryption Standard).

11. Générateur d'impulsions selon l'une quelconque des revendications 8 à 10,
**caractérisé par** le fait
que le circuit de codage (7) est constitué par un système de microcontrôleur.

12. Générateur d'impulsions selon l'une quelconque des revendications 8 à 11,
**caractérisé par** le fait
que la mémoire est réalisée comme registre de comptage pour l'enregistrement d'impulsions.

13. Générateur d'impulsions selon l'une quelconque des revendications 8 à 12,
**caractérisé par** le fait
que l'interface (8) est réalisée pour l'adjonction de la ligne d'acheminement des données (19) pour une transmission de données bidirectionnelle.

14. Générateur d'impulsions selon la revendication 11,
**caractérisé par** le fait
que, en combinaison avec le système de microcontrôleur, est réalisée une fonction de chien de garde et un Power-On-Reset.
